# EUROPÄISCHE PATENTSCHRIFT

(11) **EP 3 449 564 B1**
(45) Veröffentlichungstag und Bekanntmachung des Hinweises auf die Patenterteilung: **12.08.2020**
(21) Anmeldenummer: 17713263.6
(22) Anmeldetag: 23.03.2017
(51) Int. Cl.: H02P 21/14

(54) **VERFAHREN UND VORRICHTUNG ZUM STEUERN EINER ELEKTROMASCHINE**
METHOD AND APPARATUS FOR CONTROLLING AN ELECTRIC MACHINE
PROCÉDÉ ET DISPOSITIF DE COMMANDE D'UNE MACHINE ÉLECTRIQUE

(30) Priorität: 29.04.2016 DE 102016207375
(43) Veröffentlichungstag der Anmeldung: 06.03.2019
(73) Patentinhaber: Robert Bosch GmbH, 70442 Stuttgart (DE)
(72) Erfinder: MERKEL, Tino, 71701 Schwieberdingen (DE); BANGERTER, Michael, 71739 Oberriexingen (DE)
(86) Internationale Anmeldenummer: PCT/EP2017/056964
(87) Internationale Veröffentlichungsnummer: WO 2017/186420

(56) Entgegenhaltungen:
- DE-A1-102010 050 344
- DE-A1-102014 011 828
- DE-A1-102014 205 254
- DE-T2- 60 036 192

## Beschreibung

Die vorliegende Erfindung bezieht sich auf ein Verfahren zum Steuern einer Elektromaschine und eine entsprechende Vorrichtung.

### Stand der Technik

Die vorliegende Erfindung wird im Folgenden hauptsächlich in Bezug auf Elektromaschinen in Fahrzeugen beschrieben. Die vorliegende Erfindung ist aber auf diese Anwendung nicht beschränkt und kann in jeder Anwendung genutzt werden, in welcher Elektromaschinen zum Einsatz kommen.

Elektromaschinen werden heute in einer Vielzahl von Anwendungen eingesetzt. Eine Anwendung für Elektromaschinen, insbesondere permanenterregte Synchronmaschinen, kann z.B. der Einsatz als Antriebsmotor in einem Elektro- oder Hybridfahrzeug sein.

Aus der Druckschrift DE 600 36 192 T2 ist eine Synchronmotor-Steuervorrichtung bekannt. Aus der Druckschrift DE 10 2014 205 254 A1 ist ein Verfahren und eine Vorrichtung zum Ermitteln einer Entmagnetisierung eines Permanentmagneten eines Elektromotors bekannt. Aus der Druckschrift DE 10 2010 050 344 A1 ist eine feldorientierte Regelung einer Drehfeldmaschine bekannt.

Besonders bei Elektromaschinen mit sehr hoher Dynamik, also stetigen Lastwechseln, ist mit einer hohen thermischen Belastung der jeweiligen Elektromaschine zu rechnen. Da die Grenztemperaturen und die maximale Strombelastung des Magnetmaterials üblicherweise optimiert ausgenutzt werden, kann bei hohen thermischen Belastungen die Elektromaschine anfällig für eine Entmagnetisierung sein. Ein Systemfehler kann folglich zu einer partiellen oder sogar vollständigen Entmagnetisierung der Elektromaschine führen.

Üblicherweise kann ein Fahrzeug mit einer entmagnetisierten Elektromaschine nicht weiter bewegt werden und muss stillgelegt werden.

### Offenbarung der Erfindung

Eine permanenterregte Synchronmaschine, bei welcher die Dauermagneten entmagnetisiert wurden, kann üblicherweise nicht weiter angetrieben werden. Insbesondere in einem Fahrzeug kann ein solcher Fehler dazu führen, dass das Fahrzeug nicht weiter bewegt und z.B. nicht in eine Werkstatt gefahren werden kann.

Im Gegensatz zu üblichen Elektromaschinen mit einem sehr geringen Reluktanzanteil nutzt die vorliegende Erfindung die Erkenntnis, dass Elektromaschinen mit einem ausgeprägten Reluktanzanteil oder Reluktanzmomentanteil von z.B. bis zu 50% auch dann angesteuert werden können, wenn die Dauermagneten der Elektromaschine z.B. auf Grund eines Fehlers entmagnetisiert wurden.

Gegenstand der vorliegenden Erfindung können also z.B. auch Fahrzeuge sein, die eine entsprechend dimensionierte Elektromaschine aufweisen, die z.B. einen Reluktanzanteil von 50% aufweist. Unter einem Reluktanzanteil oder Reluktanzmomentanteil von 50% ist dabei zu verstehen, dass die Elektromaschine 50% ihres Drehmoments über den Reluktanzanteil erzeugt.

Dies bedeutet gleichzeitig, dass die Elektromaschine im Fehlerfall immer noch ein Drehmoment in Höhe von 50% ihres Nenndrehmoments erzeugen kann. Im Fehlerfall kann mit diesem Drehmoment das Fahrzeug zwar nicht auf seine Höchstgeschwindigkeit beschleunigt werden. Allerdings kann es in einem sog. "Limp Home" Modus zumindest bewegt werden. Das Fahrzeug kann also z.B. aus einer Gefahrenzone bewegt oder in eine Werkstatt gefahren werden.

Üblicherweise leitet eine übergeordnete Motorsteuerung bei permanenterregte Synchronmaschinen im Fehlerfall einen sog. "aktiven Kurzschluss" ein. In diesem Zustand kann die Elektromaschine nicht mehr angetrieben werden. Da im aktiven Kurzschluss hohe transiente Ströme fließen können, kann dieser zu einer teilweisen oder vollständigen Entmagnetisierung der Elektromaschine führen. Daher sieht die vorliegende Erfindung vor, dass im Fehlerfall ein Entmagnetisierungsgrad der Elektromaschine erfasst wird.

Wurde der Entmagnetisierungsgrad der Elektromaschine erfasst, kann die Ansteuerung der Elektromaschine, insbesondere die Sollwertgenerierung der Steuerung oder Regelung, an die neuen Parameter der Elektromaschine angepasst werden. Anschließend kann die Elektromaschine entsprechend angesteuert werden und mit reduziertem Drehmoment weiter genutzt werden.

Vorteilhafte Ausführungsformen und Weiterbildungen ergeben sich aus den Unteransprüchen sowie aus der Beschreibung unter Bezugnahme auf die Figuren.

In einer Ausführungsform können beim Erfassen des Entmagnetisierungsgrads im aktiven Kurzschluss der Elektromaschine die Phasenströme erfasst werden und der Entmagnetisierungsgrad basierend auf einem Verhältnis der erfassten Phasenströme und der Nennströme der Elektromaschine, bei einem aktiven Kurzschluss ohne Entmagnetisierung der Elektromaschine, bestimmt werden. Dies ermöglicht eine sehr schnelle Erfassung des Entmagnetisierungsgrads direkt nach dem Eintritt des Fehlerfalls.

In einer Ausführungsform können beim Erfassen des Entmagnetisierungsgrads im Freilauf der Elektromaschine die Phasenströme zu null geregelt werden und der Entmagnetisierungsgrad basierend auf der D-Achsenspannung im rotorfesten Koordinatensystem bestimmt werden. Die Messung des Entmagnetisierungsgrads kann in einem Zeitraum durchgeführt werden, der dem Fahrer im Fehlerfall nicht störend auffällt. Experimentell wurde bestimmt, dass eine solche Messung z.B. weniger als 200ms benötigt, in welchen das Moment der Elektromaschine zu null wird.

Befindet sich die Elektromaschine im Stillstand, steht also z.B. ein Elektrofahrzeug, kann der Entmagnetisierungsgrad der Elektromaschine nicht erfasst werden. Folglich muss die Elektromaschine in Drehung versetzt werden, um diesen zu Erfassen. In einer Ausführungsform kann daher aus dem Stillstand vor dem Erfassen des Entmagnetisierungsgrads die Elektromaschine basierend auf den Kennfeldern und/oder Parametern des Regelbetriebs angesteuert und in Drehung versetzt werden. Erfolgt mit diesen Parametern keine Drehung der Elektromaschine kann von einer vollständigen Entmagnetisierung ausgegangen werden.

In einer Ausführungsform kann die mechanische Verbindung zwischen der Elektromaschine und durch die Elektromaschine angetriebenen Elementen vor dem Ansteuern der Elektromaschine getrennt werden. Bei einem Elektrofahrzeug kann z.B. die Kupplung geöffnet werden. Das Fahrzeug wird also bei einer Drehung der Elektromaschine nicht angetrieben. Es ist folglich lediglich eine sehr geringe Leistung nötig, um die Elektromaschine in Drehung zu versetzen. Ferner kann bei völligem Stillstand des Fahrzeugs, also ohne eine Bewegung des Fahrzeugs, erfasst werden, ob ein Betrieb der Elektromaschine problemlos möglich ist. Es kann z.B. erst nachdem ein problemloser Notbetrieb der Elektromaschine verifiziert ist, eine Bewegung des Fahrzeugs freigegeben werden.

In einer Ausführungsform kann basierend auf der erfassten D-Achsenspannung der aktuelle Permanentmagnetfluss der Elektromaschine berechnet werden und mit einem nominalen Permanentmagnetfluss der Elektromaschine verglichen werden, um den Entmagnetisierungsgrad der Elektromaschine zu berechnen.

In einer Ausführungsform können beim Anpassen der Sollwertgenerierung in der Regelung der Elektromaschine vorgegebene Kennfelder und/oder Parameter für die Daten der Elektromaschine für den jeweiligen Entmagnetisierungsgrad ausgewählt werden. Diese Kennfelder und Parameter betreffen Variablen in der Regelung, welche die Eigenschaften der Elektromaschine beschreiben. Solche Eigenschaften können z.B. die Induktivität der Elektromaschine oder dergleichen betreffen.

In einer Ausführungsform können beim Anpassen der Sollwertgenerierung in der Regelung der Elektromaschine vorgegebene Kennfelder und/oder Parameter der Regelung für den jeweiligen Entmagnetisierungsgrad ausgewählt werden. Diese Kennfelder und Parameter können z.B. Betriebskennfelder und Stromregelparameter in der Regelung für die Elektromaschine betreffen. Durch die Anpassung dieser Parameter wird ein stabiler Regelkreis gewährleistet und der Betriebspunkt unter den durch die Entmagnetisierung gegebenen Randbedingungen optimal eingestellt.

In einer Ausführungsform kann beim Steuern der Elektromaschine eine Regelung basierend auf den ausgewählten Kennfeldern und/oder Parametern durchgeführt werden. Die Elektromaschine kann also basierend auf ihrem Reluktanzanteil weiter betrieben werden, auch wenn sie teilweise oder vollständig entmagnetisiert ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm einer Ausführungsform eines erfindungsgemäßen Verfahrens;
- Fig. 2: ein Ablaufdiagramm einer weiteren Ausführungsform eines erfindungsgemäßen Verfahrens;
- Fig. 3: ein Ablaufdiagramm einer weiteren Ausführungsform eines erfindungsgemäßen Verfahrens; und
- Fig. 4: ein Blockschaltbild einer Ausführungsform einer erfindungsgemäßen Vorrichtung.

In allen Figuren sind gleiche bzw. funktionsgleiche Elemente und Vorrichtungen - sofern nichts anderes angegeben ist - mit denselben Bezugszeichen versehen worden.

### Ausführungsformen der Erfindung

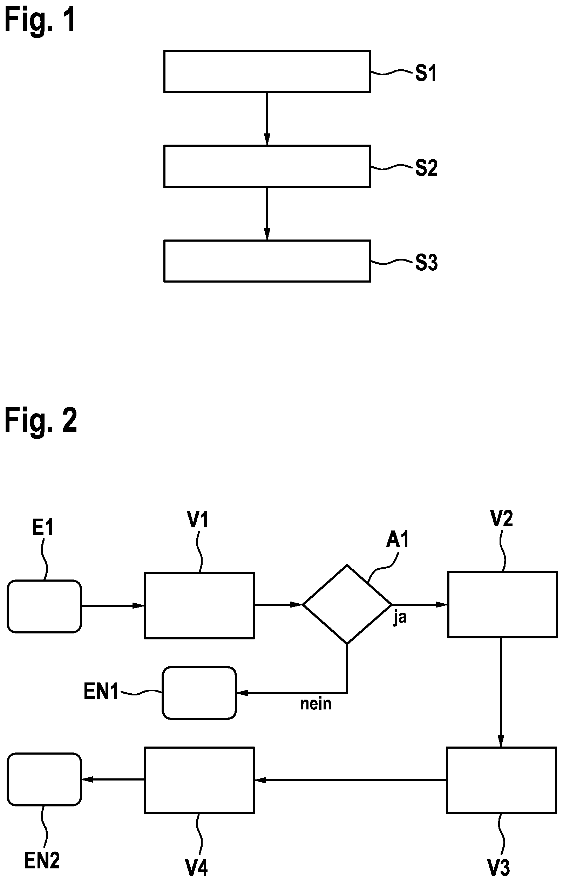

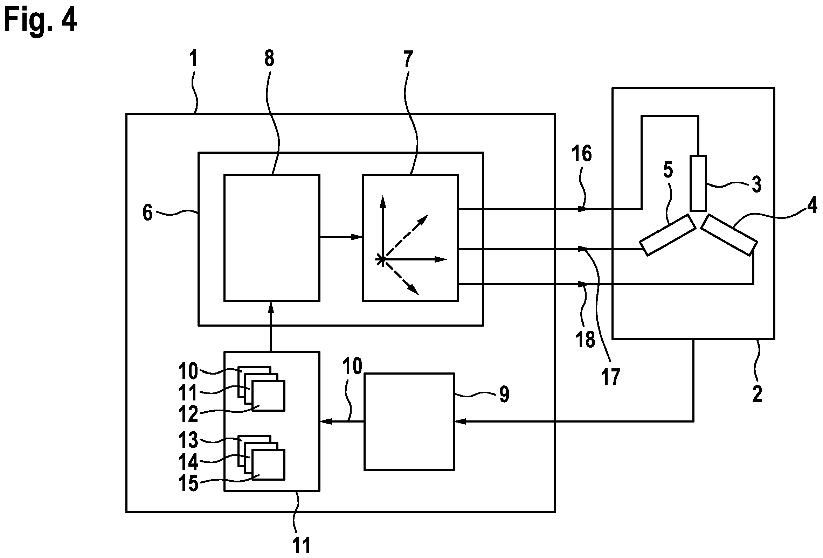

Fig. 1 zeigt ein Ablaufdiagramm einer Ausführungsform eines erfindungsgemäßen Verfahrens zum Steuern einer Elektromaschine 2 (siehe Fig. 4). Das Verfahren basiert auf der Tatsache, dass die Elektromaschine 2 einen Reluktanzmomentanteil aufweist, der ausreichend groß ist, z.B. ein Fahrzeug im Fehlerfall zu bewegen, auch wenn dies mit einer reduzierten Dynamik und Geschwindigkeit erfolgt.

Das Verfahren wird dabei im Fehlerfall der Elektromaschine 2 bzw. des Antriebssystems (nicht separat dargestellt) durchgeführt, um einen Notbetrieb zu ermöglichen.

Folglich wird im Fehlerfall ein Entmagnetisierungsgrad 10 der Elektromaschine 2 erfasst, S1. Basierend auf diesem Entmagnetisierungsgrad 10 wird eine Sollwertgenerierung 8 für die Steuerung bzw. Regelung der Elektromaschine 2 angepasst, S2. Schließlich wird die Elektromaschine 2 basierend auf der angepassten Sollwertgenerierung 8 angesteuert, S3.

Weist eine Elektromaschine 2 z.B. einen Reluktanzmomentanteil von 50% auf, kann bei vollständiger Entmagnetisierung der Elektromaschine 2 im Fehlerfall weiterhin ein Drehmoment von 50% des Nenndrehmoments der Elektromaschine 2 aufgebracht werden.

Der Entmagnetisierungsgrad 10 kann zumindest in zwei unterschiedlichen Zuständen der Elektromaschine 2 erfasst werden.

Im aktiven Kurzschluss der Elektromaschine 2 können dazu die Phasenströme 16, 17,18 der Elektromaschine 2 erfasst werden und der Entmagnetisierungsgrad 10 basierend auf einem Verhältnis der erfassten Phasenströmen 16, 17, 18 und der Nennströme der Elektromaschine 2, bei einem aktiven Kurzschluss ohne Entmagnetisierung der Elektromaschine 2, bestimmt werden.

Alternativ können beim Erfassen S1 des Entmagnetisierungsgrads 10 im Freilauf der Elektromaschine 2 die Phasenströme 16, 17, 18 zu null geregelt werden, auch stromlose Regelung genannt. Der Entmagnetisierungsgrad 10 kann dann basierend auf der D-Achsenspannung im rotorfesten Koordinatensystem bestimmt werden.

Um den Entmagnetisierungsgrad 10 zu erfassen, ist eine Drehung der Elektromaschine 2 notwendig. Folglich kann aus dem Stillstand vor dem Erfassen S1 des Entmagnetisierungsgrads 10 die Elektromaschine 2 basierend auf den Kennfeldern und/oder Parametern des Regelbetriebs angesteuert und in Drehung versetzt werden. Dieser Fall kann z.B. eintreten, wenn nach Eintreten des Fehlerfalls bis zum Stillstand eines Fahrzeugs der Entmagnetisierungsgrad 10 nicht bestimmt werden konnte.

Befindet sich z.B. ein Fahrzeugt im Stilstand, kann die mechanische Verbindung zwischen der Elektromaschine 2 und durch die Elektromaschine 2 angetriebenen Elementen vor dem Ansteuern der Elektromaschine 2 getrennt werden. Die Elektromaschine 2 ist damit lastfrei und kann sehr leicht in Drehung versetzt werden.

Sind die Phasenströme 16, 17, 18 zu null geregelt, wird basierend auf der erfassten D-Achsenspannung der aktuelle Permanentmagnetfluss der Elektromaschine 2 berechnet und mit einem nominalen Permanentmagnetfluss der Elektromaschine 2 verglichen, um den Entmagnetisierungsgrad 10 der Elektromaschine 2 zu berechnen.

Um die Kenntnis des Entmagnetisierungsgrads 10 in der Ansteuerung der Elektromaschine 2 nutzen zu können, können beim Anpassen S2 in der Ansteuerung der Elektromaschine 2 vorgegebene Kennfelder und/oder Parameter 10 - 12 für die Daten der Elektromaschine 2 ausgewählt werden. Diese Kennfelder und Parameter betreffen Variablen in der Regelung, welche die Eigenschaften der Elektromaschine beschreiben. Solche Eigenschaften können z.B. die Induktivität der Elektromaschine oder dergleichen betreffen. Solche Kennfelder und/oder Parameter 10 - 12 können dabei für unterschiedliche Entmagnetisierungsgrade 10 vorgegeben sein. Stehen für einen bestimmten Entmagnetisierungsgrad 10 keine Kennfelder und/oder Parameter 10 - 12 zur Verfügung, können diese auch interpoliert werden. Ebenso können vorgegebene Kennfelder und/oder Parameter 13 - 14 der Regelung für den jeweiligen Entmagnetisierungsgrad 10 ausgewählt werden. Diese Kennfelder und Parameter können z.B. Betriebskennfelder und Stromregelparameter in der Regelung für die Elektromaschine betreffen.

Schließlich wird beim Steuern S3 der Elektromaschine 2 eine Regelung, insbesondere eine Vektor-basierte Regelung, basierend auf den ausgewählten Kennfeldern und/oder Parametern 10 - 15 durchgeführt.

Fig. 2 zeigt ein Ablaufdiagramm einer weiteren Ausführungsform eines erfindungsgemäßen Verfahrens.

Das Verfahren der Fig. 2 beginnt an dem Einstiegsknoten E1, in welchem ein Regelbetrieb der Elektromaschine 2 stattfindet. Der Vorgang V1 stellt den Eintritt eines Systemfehlers dar, der dazu führt, dass die Elektromaschine 2 abgeschaltet wird. Ein solcher Vorgang V1 kann z.B. durch eine Überstromüberwachung in dem Antriebssystem ausgelöst werden.

Im Auswahlknoten A1 wird ausgewählt, ob eine Anpassung der Ansteuerung der Elektromaschine 2 nötig ist oder nicht. Ist diese nicht nötig, weil z.B. keine Entmagnetisierung vorliegt, wird das Verfahren bei Endknoten EN1 beendet. Ist eine Anpassung allerdings nötig, wird in Vorgang V2 die Schwere der Entmagnetisierung der Elektromaschine 2 erfasst und in Vorgang V3 die Maschinenbedatung in der Ansteuerung der Elektromaschine 2 entsprechend dem erfassten Entmagnetisierungsgrad 10 angepasst. Schließlich wird in Vorgang V4 die Reglerbedatung in der Ansteuerung der Elektromaschine 2 entsprechend dem erfassten Entmagnetisierungsgrad 10 angepasst. Danach wird die Ansteuerung der Elektromaschine 2 in Endknoten EN2 wieder aufgenommen.

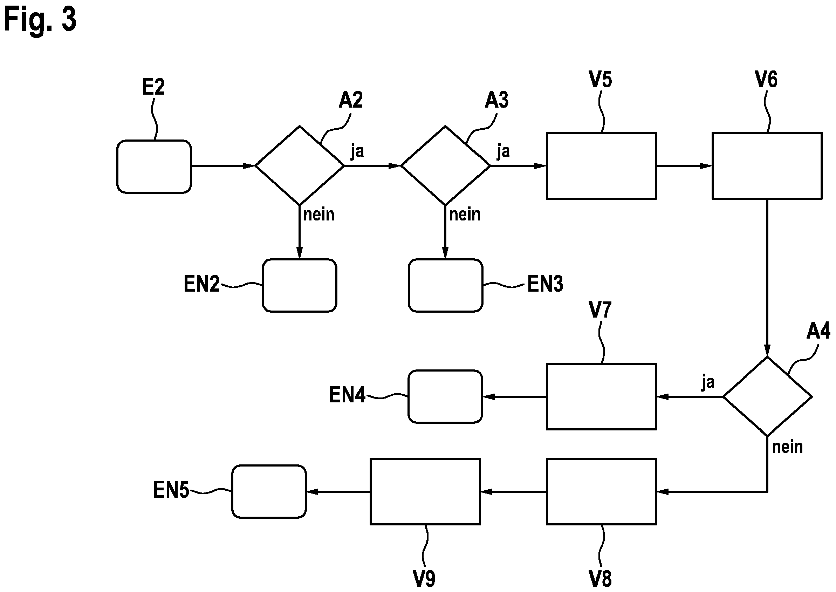

Fig. 3 zeigt ein Ablaufdiagramm einer weiteren Ausführungsform desjenigen Teils der erfindungsgemäßen Verfahrens, mit welchem der Entmagnetisierungsgrad 10 bestimmt wird.

Der Einstiegsknoten E2 stellte den Beginn der Erfassung dar. Auswahl A2 stellt sicher, dass die Elektromaschine 2 sich im Freilauf befindet. Ist dies nicht der Fall, weil das System sich z.B. im aktiven Kurzschluss befindet, wird in Endknoten EN2 abgewartet, bis die Elektromaschine 2 sich im Freilauf befindet und das Verfahren erneut bei E2 begonnen.

Befindet sich die Elektromaschine 2 bei A2 im Freilauf, wird bei A3 sichergestellt, dass die Elektromaschine 2 rotiert. Ist dies nicht der Fall, wird in EN3 die Elektromaschine 2 mit den Nennparametern und/oder - Kennfeldern der Regelung im fehlerfreien Betrieb in Drehung versetzt. Befindet sich die Elektromaschine 2 in Drehung, wird in V5 eine vektorbasierte Stromregelung aktiviert, welche die Phasenströme 16, 17, 18 zu null regelt. In V6 wird die D-Achsenspannung im rotorfesten Koordinatensystem bestimmt.

In A4 wird unterschieden, ob die Elektromaschine 2 vollständig entmagnetisiert ist oder nicht. Ist dies der Fall, werden in V7 die Kennfelder und/oder Parameter 10 - 15 in der Ansteuerung der Elektromaschine 2 für eine Elektromaschine 2 ohne magnetischen Fluss, also ein Reluktanzmaschine, ausgewählt.

Ist die Elektromaschine 2 nicht vollständig entmagnetisiert, wird in V8 der Spannungszeiger auf der D-Achse im rotorfesten Koordinatensystem bestimmt und in V9 die Flussreduktion in der Elektromaschine 2, also der Entmagnetisierungsgrad 10, bestimmt. Dazu kann z.B. auch eine Temperaturkompensation des Spannungszeigers auf der D-Achse durchgeführt werden.

Schließlich wird in EN5 der Betrieb der Elektromaschine 2 mit den entsprechenden Kennfeldern und/oder Parametern wieder aufgenommen, welche dem jeweiligen Entmagnetisierungsgrad 10 entsprechen.

Fig. 4 zeigt ein Blockschaltbild einer Ausführungsform einer erfindungsgemäßen Vorrichtung 1 zur Ansteuerung einer Elektromaschine 2 mit einem Reluktanzmomentanteil im Fehlerfall. In Fig. 4 ist eine dreiphasige Asynchronmaschine 2 mit einem Reluktanzmomentanteil von 50% dargestellt. Es versteht sich, dass je nach Auslegung der Asynchronmaschine 2 andere Reluktanzmomentanteile zur Verfügung stehen können und die Erfindung analog anzuwenden ist. Es verändert sich dadurch lediglich das Drehmoment, welches im Fehlerfall durch die Elektromaschine bereitgestellt werden kann.

Die Vorrichtung 1 weist eine Regeleinrichtung 6 auf. Diese steuert die Elektromaschine 2 basierend auf einer Vektorsteuerung 7 bzw. einer sog. vektorbasierten Steuerung 7 an. Bei einer solchen Steuerung werden die Sollströme in einem rotorfesten Koordinatensystem berechnet und dann in das statorfeste Koordinatensystem transformiert, um die Elektromaschine 2 anzusteuern. In einer Ausführungsform kann die Regeleinrichtung 6 auch Bestandteil einer übergeordneten Steuerung in dem Antriebssystem sein und eine entsprechende Schnittstelle zu den weiteren Komponenten der Vorrichtung 1 aufweisen. Ferner können zumindest einige der Komponenten der Vorrichtung 1 in der übergeordneten Steuerung, z.B. als Softwarekomponenten, integriert sein und deren Sensoren und weitere Komponenten nutzen.

In der Vorrichtung 1 ist ferner eine Erfassungsvorrichtung 9 vorgesehen. Diese erfasst einen Entmagnetisierungsgrad 10 der Elektromaschine 2 im Fehlerfall. Dazu kann die Erfassungsvorrichtung 9 z.B. die oben erläuterten Verfahrensschritte nutzen.

Die Erfassungsvorrichtung 9 kann im aktiven Kurzschluss der Elektromaschine 2 die Phasenströme 16 - 18 erfassen und den Entmagnetisierungsgrad 10 basierend auf einem Verhältnis der erfassten Phasenströmen 16 - 18 und der Nennströme der Elektromaschine 2, bei einem aktiven Kurzschluss ohne Entmagnetisierung der Elektromaschine 2, bestimmen. Die Erfassungsvorrichtung 9 kann dazu eigene Sensoren aufweisen oder Sensoren der übergeordneten Steuerung nutzen.

Die Erfassungsvorrichtung 9 kann alternativ im Freilauf der Elektromaschine 2 die Phasenströme 16 - 18 zu null zu regeln und den Entmagnetisierungsgrad 10 basierend auf der D-Achsenspannung im rotorfesten Koordinatensystem bestimmen. Diese kann dazu basierend auf der erfassten D-Achsenspannung den aktuellen Permanentmagnetfluss der Elektromaschine 2 berechnen und mit einem nominalen Permanentmagnetfluss der Elektromaschine 2 vergleichen. Basierend auf diesem Verhältnis kann der Entmagnetisierungsgrad 10 der Elektromaschine 2 bestimmt werden.

Befindet sich die Elektromaschine 2 im Stillstand, kann die Erfassungsvorrichtung 9 vor dem Erfassen des Entmagnetisierungsgrads 10 die Elektromaschine 2 basierend auf den Kennfeldern und/oder Parametern des Regelbetriebs ansteuern und in Drehung zu versetzen. Vorher kann die mechanische Verbindung zwischen der Elektromaschine 2 und durch die Elektromaschine 2 angetriebenen Elementen vor dem Ansteuern der Elektromaschine 2 getrennt werden.

Eine Anpassungsvorrichtung 11 nutzt die Erkenntnis über den Entmagnetisierungsgrad 10 und passt eine Sollwertgenerierung 8 der Regeleinrichtung 6 basierend auf dem Entmagnetisierungsgrad 10 an, so dass unter den gegebenen Randbedingungen der optimale Wirkungsgrad mit der Elektromaschine 2 erreicht wird.

Beim Anpassen der Sollwertgenerierung 8 kann die Anpassungsvorrichtung 11 für den jeweiligen Entmagnetisierungsgrad 10 der Regeleinrichtung 6 vorgegebene Kennfelder und/oder Parameter 10 - 12 für die Daten der Elektromaschine 2 und/oder vorgegebene Kennfelder und/oder Parameter 13 - 15 der Regelung übermitteln oder in der Regeleinrichtung 6 auswählen, wenn sie in der Regeleinrichtung 6 bereits hinterlegt sind.

Schließlich kann die Regeleinrichtung 6 die ausgewählten Kennfeldern und/oder Parameter 10 - 15 nutzen, um eine Regelung der Elektromaschine 2 durchzuführen.

## Patentansprüche

1. Verfahren zum Steuern einer Elektromaschine (2) mit einem Reluktanzmomentanteil im Fehlerfall, aufweisend die Schritte:
Erfassen (S1) eines Entmagnetisierungsgrads (10) der Elektromaschine (2) im Fehlerfall;
Anpassen (S2) einer Sollwertgenerierung für die Steuerung der Elektromaschine (2) basierend auf dem Entmagnetisierungsgrad (10); und
Ansteuern (S3) der Elektromaschine (2) basierend auf der angepassten Sollwertgenerierung.

2. Verfahren nach Anspruch 1, wobei beim Erfassen (S1) des Entmagnetisierungsgrads (10) im aktiven Kurzschluss der Elektromaschine (2) die Phasenströme (16 - 18) erfasst werden und der Entmagnetisierungsgrad (10) basierend auf einem Verhältnis der erfassten Phasenströmen (16 - 18) und der Nennströme der Elektromaschine (2), bei einem aktiven Kurzschluss ohne Entmagnetisierung der Elektromaschine (2), bestimmt wird.

3. Verfahren nach einem der vorherigen Ansprüche, wobei beim Erfassen (S1) des Entmagnetisierungsgrads (10) im Freilauf der Elektromaschine (2) die Phasenströme (16 - 18) zu null geregelt werden und der Entmagnetisierungsgrad (10) basierend auf der D-Achsenspannung im rotorfesten Koordinatensystem bestimmt wird.

4. Verfahren nach Anspruch 3, wobei aus dem Stillstand vor dem Erfassen (S1) des Entmagnetisierungsgrads (10) die Elektromaschine (2) basierend auf den Kennfeldern und/oder Parametern des Regelbetriebs angesteuert und in Drehung versetzt wird.

5. Verfahren nach Anspruch 4, wobei die mechanische Verbindung zwischen der Elektromaschine (2) und durch die Elektromaschine (2) angetriebenen Elementen vor dem Ansteuern der Elektromaschine (2) getrennt wird.

6. Verfahren nach einem der Ansprüche 3 bis 5, wobei basierend auf der erfassten D-Achsenspannung der aktuelle Permanentmagnetfluss der Elektromaschine (2) berechnet wird und mit einem nominalen Permanentmagnetfluss der Elektromaschine (2) verglichen wird, um den Entmagnetisierungsgrad (10) der Elektromaschine (2) zu berechnen.

7. Verfahren nach einem der vorherigen Ansprüche, wobei beim Anpassen (S2) der Sollwertgenerierung in der Regelung der Elektromaschine (2) vorgegebene Kennfelder und/oder Parameter (10 - 12) für die Daten der Elektromaschine (2) für den jeweiligen Entmagnetisierungsgrad (10) ausgewählt und/oder bereitgestellt werden.

8. Verfahren nach einem der vorherigen Ansprüche, wobei beim Anpassen (S2) der Sollwertgenerierung in der Regelung der Elektromaschine (2) vorgegebene Kennfelder und/oder Parameter (13 - 14) der Regelung für den jeweiligen Entmagnetisierungsgrad (10) ausgewählt und/oder bereitgestellt werden.

9. Verfahren nach einem der vorherigen Ansprüche 7 und 8, wobei beim Steuern (S3) der Elektromaschine (2) eine Regelung basierend auf den ausgewählten und/oder bereitgestellten Kennfeldern und/oder Parametern (10 - 15) durchgeführt wird.

10. Vorrichtung zur Steuerung einer Elektromaschine (2) mit einem Reluktanzmomentanteil im Fehlerfall, mit
einer Regeleinrichtung (6), welche ausgebildet ist, die Elektromaschine (2) anzusteuern;
einer Erfassungsvorrichtung (9), welche ausgebildet ist, einen Entmagnetisierungsgrad (10) der Elektromaschine (2) im Fehlerfall zu erfassen;
einer Anpassungsvorrichtung (11), welche ausgebildet ist, eine Sollwertgenerierung (8) der Regeleinrichtung (6) basierend auf dem Entmagnetisierungsgrad (10) anzupassen.

11. Vorrichtung nach Anspruch 10, wobei die Erfassungsvorrichtung (9) ausgebildet ist, beim Erfassen des Entmagnetisierungsgrads (10), im aktiven Kurzschluss der Elektromaschine (2) die Phasenströme (16 - 18) zu erfassen und den Entmagnetisierungsgrad (10) basierend auf einem Verhältnis der erfassten Phasenströmen (16 - 18) und der Nennströme der Elektromaschine (2), bei einem aktiven Kurzschluss ohne Entmagnetisierung der Elektromaschine (2), zu bestimmen.

12. Vorrichtung nach einem der vorherigen Ansprüche 10 und 11, wobei die Erfassungsvorrichtung (9) ausgebildet ist, beim Erfassen des Entmagnetisierungsgrads (10) im Freilauf der Elektromaschine (2) die Phasenströme (16 - 18) zu null zu regeln und den Entmagnetisierungsgrad (10) basierend auf der D-Achsenspannung im rotorfesten Koordinatensystem zu bestimmen, und
wobei die Erfassungsvorrichtung (9) insbesondere ausgebildet ist, aus dem Stillstand vor dem Erfassen des Entmagnetisierungsgrads (10) die Elektromaschine (2) basierend auf den Kennfeldern und/oder Parametern des Regelbetriebs anzusteuern und in Drehung zu versetzen, und insbesondere die mechanische Verbindung zwischen der Elektromaschine (2) und durch die Elektromaschine (2) angetriebenen Elementen vor dem Ansteuern der Elektromaschine (2) zu trennen.

13. Vorrichtung nach Anspruch 12, wobei die Erfassungsvorrichtung (9) ausgebildet ist, basierend auf der erfassten D-Achsenspannung den aktuellen Permanentmagnetfluss der Elektromaschine (2) zu berechnen und mit einem nominalen Permanentmagnetfluss der Elektromaschine (2) zu vergleichen, um den Entmagnetisierungsgrad (10) der Elektromaschine (2) zu berechnen.

14. Vorrichtung nach einem der vorherigen Ansprüche 10 bis 13, wobei die Anpassungsvorrichtung (11) ausgebildet ist, beim Anpassen der Sollwertgenerierung (8) in der Regeleinrichtung (6) vorgegebene Kennfelder und/oder Parameter (10 - 12) für die Daten der Elektromaschine (2) für den jeweiligen Entmagnetisierungsgrad (10) auszuwählen; und/oder wobei die Anpassungsvorrichtung (11) ausgebildet ist, beim Anpassen der Sollwertgenerierung (8) in der Regeleinrichtung (6) vorgegebene Kennfelder und/oder Parameter (13 - 15) der Regelung für den jeweiligen Entmagnetisierungsgrad (10) auszuwählen.

15. Vorrichtung nach Anspruch 14, wobei die Regeleinrichtung (6) ausgebildet ist, eine Regelung der Elektromaschine (2) basierend auf den ausgewählten Kennfeldern und/oder Parametern (10 - 15) durchzuführen.

## Claims

1. Method for controlling an electric machine (2) having a reluctance torque portion in the event of a malfunction, comprising the steps:
- Ascertaining (S1) a degree of demagnetization (10) of the electric machine (2) in the event of a malfunction;
- Adjusting (S2) a desired value generating procedure for controlling the electric machine (2) based on the degree of demagnetization (10); and
- Controlling (S3) the electric machine (2) based on the adjusted desired value generating procedure.

2. Method according to Claim 1, wherein during the procedure of ascertaining (S1) in the active short circuit of the electric machine (2) the degree of demagnetization (10) the phase currents (16 - 18) are ascertained and the degree of demagnetization (10) is determined based on a relationship between the ascertained phase currents (16 - 18) and the nominal currents of the electric machine (2) in the case of an active short circuit mode without demagnetization of the electric machine (2).

3. Method according to any one of the preceding claims, wherein during the procedure of ascertaining (S1) the degree of demagnetization (10) with the electric machine (2) in the freewheel mode the phase currents (16 - 18) are controlled to zero and the degree of demagnetization (10) is determined based on the D-axis voltage in the rotor-fixed coordinate system.

4. Method according to Claim 3, wherein based on the characteristic fields and/or parameters of the closed-loop control operation the electric machine (2) is controlled out of its standstill state and set in rotation prior to ascertaining (S1) the degree of demagnetization (10).

5. Method according to Claim 4, wherein the mechanical connection between the electric machine (2) and the elements that are driven by means of the electric machine (2) is disconnected prior to controlling the electric machine (2).

6. Method according to any one of Claims 3 to 5, wherein based on the ascertained D-axis voltage the prevailing permanent magnetic flux of the electric machine (2) is calculated and compared with a nominal permanent magnetic flux of the electric machine (2) in order to calculate the degree of demagnetization (10) of the electric machine (2).

7. Method according to any one of the preceding claims, wherein during the procedure of adjusting (S2) the desired value generating procedure in the closed-loop control procedure of the electric machine (2) predetermined characteristic fields and/or parameters (10 - 12) for the data of the electric machine (2) are selected and/or provided for the respective degree of demagnetization (10) .

8. Method according to any one of the preceding claims, wherein during the procedure of adjusting (S2) the desired value generating procedure in the closed-loop control procedure of the electric machine (2) predetermined characteristic fields and/or parameters (13-14) in the closed-loop control procedure are selected and/or provided for the respective degree of demagnetization (10).

9. Method according to any one of the preceding Claims 7 and 8, wherein during the control procedure (S3) of the electric machine (2) a closed-loop control procedure is performed based on the selected and/or provided characteristic fields and/or parameters (10 - 15).

10. Apparatus for controlling an electric machine (2) having a reluctance torque portion in the event of a malfunction, said apparatus having:
- a control device (6) that is configured so as to control the electric machine (2);
- a sensor device (9) that is configured so as to ascertain a degree of demagnetization (10) of the electric machine (2) in the event of a malfunction;
- an adjusting device (11) that is configured so as to adjust a desired value generating procedure (8) of the control device (6) based on the degree of demagnetization (10).

11. Apparatus according to Claim 10, wherein the sensor device (9) is configured so as during the procedure of ascertaining the degree of demagnetization (10) in the active short circuit mode of the electric machine (2) to ascertain the phase currents (16 - 18) and to determine based on a relationship between the ascertained phase currents (16 - 18) and the nominal currents of the electric machine (2) the degree of demagnetization (10) in the case of an active short circuit mode without demagnetization of the electric machine (2).

12. Apparatus according to any one of the preceding Claims 10 and 11, wherein the sensor device (9) is configured so as during the procedure of ascertaining the degree of demagnetization (10) with the electric machine (2) in the freewheel mode to control the phase currents (16 - 18) to zero and to determine the degree of demagnetization (10) based on the D-axis voltage in the rotor-fixed coordinate system, and
wherein the sensor device (9) is configured in particular so as to control the electric machine (2) out of its standstill state and set it in rotation prior to ascertaining the degree of demagnetization (10) based on the characteristic fields and/or parameters of the closed-loop control operation, and in particular prior to controlling the electric machine (2) to disconnect the mechanical connection between the electric machine (2) and the elements that are driven by means of the electric machine (2).

13. Apparatus according to Claim 12, wherein the sensor device (9) is configured so as based on the ascertained D-axis voltage to calculate the prevailing permanent magnetic flux of the electric machine (2) and to compare it with a nominal permanent magnetic flux of the electric machine (2) in order to calculate the degree of demagnetization (10) of the electric machine (2).

14. Apparatus according to any one of the preceding Claims 10 to 13, wherein the adjusting device (11) is configured so as during the procedure of adjusting the desired value generating procedure (8) in the control device (6) to select predetermined characteristic fields and/or parameters (10 - 12) for the data of the electric machine (2) for the respective degree of demagnetization (10); and/or wherein the adjusting device (11) is configured so as during the procedure of adjusting the desired value generating procedure (8) in the control device (6) to select predetermined characteristic fields and/or parameters (13 - 15) of the closed-loop control procedure for the respective degree of demagnetization (10) .

15. Apparatus according to Claim 14, wherein the control device (6) is configured so as to perform a closed-loop control procedure of the electric machine (2) based on the selected characteristic fields and/or parameters (10 - 15) .

## Revendications

1. Procédé de commande d'une machine électrique (2) avec une composante de couple de réluctance en cas de défaillance, comprenant les étapes consistant à :
détecter (S1) un degré de démagnétisation (10) de la machine électrique (2) en cas de défaillance ;
ajuster (S2) une génération de valeur de consigne pour la commande de la machine électrique (2) sur la base du degré de démagnétisation (10) ; et
commander (S3) la machine électrique (2) sur la base de la génération de valeur de consigne ajustée.

2. Procédé selon la revendication 1, dans lequel, lors de la détection (S1) du degré de démagnétisation (10) dans le court-circuit actif de la machine électrique (2), les courants de phase (16 - 18) sont détectés et le degré de démagnétisation (10) est déterminé sur la base d'un rapport entre les courants de phase (16 - 18) détectés et les courants nominaux de la machine électrique (2), dans le cas d'un court-circuit actif sans démagnétisation de la machine électrique (2).

3. Procédé selon l'une des revendications précédentes, dans lequel, lorsque le degré de démagnétisation (10) est détecté (S1) lorsque la machine électrique (2) fonctionne en roue libre, les courants de phase (16 - 18) sont régulés à zéro et le degré de démagnétisation (10) est déterminé sur la base de la tension d'axe D dans le système de coordonnées lié au rotor.

4. Procédé selon la revendication 3, dans lequel la machine électrique (2) est entraînée et mise en rotation à partir de l'arrêt avant que le degré de démagnétisation (10) soit détecté (S1) sur la base des diagrammes caractéristiques et/ou des paramètres du fonctionnement régulé.

5. Procédé selon la revendication 4, dans lequel la liaison mécanique entre la machine électrique (2) et les éléments entraînés par la machine électrique (2) est interrompue avant que la machine électrique (2) soit commandée.

6. Procédé selon l'une des revendications 3 à 5, dans lequel le flux magnétique permanent actuel de la machine électrique (2) est calculé sur la base de la tension d'axe D détectée et comparé à un flux magnétique permanent nominal de la machine électrique (2) afin de calculer le degré de démagnétisation (10) de la machine électrique (2).

7. Procédé selon l'une des revendications précédentes, dans lequel, lors de j'ajustement (S2) de la génération de valeur nominale pendant la régulation de la machine électrique (2), des diagrammes caractéristiques et/ou paramètres (10 - 12) prédéterminés pour les données de la machine électrique (2) sont sélectionnés et/ou fournis pour le degré de démagnétisation (10) respectif.

8. Procédé selon l'une des revendications précédentes, dans lequel, lors de l'ajustement (S2) de la génération de valeur de consigne pendant la régulation de la machine électrique (2), des diagrammes caractéristiques et/ou paramètres (13 - 14) prédéterminés de la régulation sont sélectionnés et/ou fournis pour le degré de démagnétisation (10) respectif.

9. Procédé selon l'une des revendications 7 et 8 précédentes, dans lequel, lors de la commande (S3) de la machine électrique (2), une régulation est effectuée sur la base des diagrammes caractéristiques et/ou paramètres (10 - 15) sélectionnés et/ou fournis.

10. Dispositif de commande d'une machine électrique (2) avec une composante de couple de réluctance en cas de défaillance, comprenant
un dispositif de régulation (6) qui est conçu pour commander la machine électrique (2) ;
un dispositif de détection (9) qui est conçu pour détecter un degré de démagnétisation (10) de la machine électrique (2) en cas de défaillance ;
un dispositif d'ajustement (11) qui est conçu pour ajuster une génération de valeur de consigne (8) du dispositif de régulation (6) sur la base du degré de démagnétisation (10).

11. Dispositif selon la revendication 10, dans lequel le dispositif de détection (9) est conçu, lors de la détection du degré de démagnétisation (10), pour détecter les courants de phase (16 - 18) dans le court-circuit actif de la machine électrique (2) et pour déterminer le degré de démagnétisation (10) sur la base d'un rapport entre les courants de phase (16 - 18) détectés et les courants nominaux de la machine électrique (2), dans le cas d'un court-circuit actif sans démagnétisation de la machine électrique (2).

12. Dispositif selon l'une des revendications précédentes 10 et 11, dans lequel le dispositif de détection (9) est conçu pour réguler les courants de phase (16 - 18) à zéro lors de la détection du degré de démagnétisation (10) lorsque la machine électrique (2) fonctionne en roue libre et pour déterminer le degré de démagnétisation (10) sur la base de la tension d'axe D dans le système de coordonnées lié au rotor, et
dans lequel le dispositif de détection (9) est notamment conçu pour commander la machine électrique (2) à partir de l'arrêt avant que le degré de démagnétisation (10) soit détecté et pour la mettre en rotation sur la base des diagrammes caractéristiques et/ou des paramètres du mode de régulation, et en particulier pour interrompre la liaison mécanique entre la machine électrique (2) et les éléments entraînés par la machine électrique (2) avant la commande de la machine électrique (2).

13. Dispositif selon la revendication 12, dans lequel le dispositif de détection (9) est conçu pour calculer le flux magnétique permanent actuel de la machine électrique (2) sur la base de la tension d'axe D détectée et pour le comparer à un flux magnétique permanent nominal de la machine électrique (2) afin de calculer le degré de démagnétisation (10) de la machine électrique (2) .

14. Dispositif selon l'une des revendications 10 à 13 précédentes, dans lequel le dispositif d'ajustement (11) est conçu, lors de l'ajustement de la génération de valeur de consigne (8), pour sélectionner, dans le dispositif de régulation (6), des diagrammes caractéristiques et/ou des paramètres (10 - 12) prédéterminés pour les données de la machine électrique (2) pour le degré de démagnétisation (10) respectif ; et/ou dans lequel le dispositif d'ajustement (11) est conçu, lors de l'ajustement de la génération de valeur de consigne (8) dans le dispositif de régulation (6), pour sélectionner des diagrammes caractéristiques et/ou paramètres (13 - 15) prédéterminés de la régulation pour le degré de démagnétisation (10) respectif.

15. Dispositif selon la revendication 14, dans lequel le dispositif de régulation (6) est conçu pour effectuer une régulation de la machine électrique (2) sur la base des diagrammes caractéristiques et/ou paramètres (10-15) sélectionnés.
